# EUROPÄISCHE PATENTSCHRIFT

(11) **EP 1 682 884 B1**
(45) Veröffentlichungstag und Bekanntmachung des Hinweises auf die Patenterteilung: **04.11.2009**
(21) Anmeldenummer: 04765201.1
(22) Anmeldetag: 15.09.2004
(51) Int. Cl.: G01N 27/90, G01N 27/80, G01B 7/04

(54) **VERFAHREN ZUR QUANTITATIVEN GRÖSSENBESTIMMUNG EINES WEICHZONENBEREICHES EINES TEILGEHÄRTETEN WERKSTÜCKES**
METHOD FOR QUANTITATIVELY DETERMINING THE SIZE OF A SOFT ZONE AREA OF A PARTIALLY HARDENED WORKPIECE
PROCEDE DE DETERMINATION QUANTITATIVE DE LA GRANDEUR D'UNE REGION DE ZONE MOLLE D'UNE PIECE PARTIELLEMENT DURCIE

(30) Priorität: 10.11.2003 DE 10352422
(43) Veröffentlichungstag der Anmeldung: 26.07.2006
(73) Patentinhaber: Fraunhofer-Gesellschaft zur Förderung der angewandten Forschung e.V., 80686 München (DE)
(72) Erfinder: BECKER, Rainer, 66399 Ormesheim (DE); DISQÉ, Michael, 66125 Saarbrücken (DE); YASHAN, Andriy, 66125 Saarbrücken (DE)
(74) Vertreter: Rösler, Uwe
(86) Internationale Anmeldenummer: PCT/EP2004/010287
(87) Internationale Veröffentlichungsnummer: WO 2005/052568

(56) Entgegenhaltungen:
- EP-A- 0 833 150
- DE-A- 2 739 873
- DE-A- 3 620 491
- DE-A- 4 310 894
- DE-C- 19 620 053

## Beschreibung

### Technisches Gebiet

Die Erfindung bezieht sich auf ein Verfahren zur quantitativen Größenbestimmung eines Weichzonenbereiches eines teilgehärteten metallischen Werkstückes, das wenigstens einen gehärteten und einen ungehärteten Bereich aufweist mittels wenigstens einem Mehrfrequenzwirbelstromsensor.

### Stand der Technik

In Getriebeautomaten häufig verwendete Bauelemente sind so genannte Planetengetriebe, deren Zahnräder andauernd miteinander in Eingriff stehen. Trotz der Vielzahl unterschiedlich ausgebildeter Planetengetriebe ist allen derartigen Getriebetypen gemeinsam, dass wenigstens ein als Planetenrad ausgebildetes Zahnrad in Eingriff mit einem zentral angeordneten Sonnenrad sowie einem peripher umlaufenden, innen verzahnten Hohlrad steht. Die Planetenräder sind zumeist zentrisch von so genannten Planetenradbolzen durchsetzt, die die Planetenräder beidseitig überragen. Zur Herstellung derartiger Planetenradbolzen werden metallische voll- oder hohlzylinderartig ausgebildete Stangenprofile auf eine gewünschte Länge gebracht. Zur Verbesserung der Materialfestigkeit werden anschließend die abgelängten zylindrischen Formteile einem Härtungsprozess unterzogen, wobei zu Zwecken einer nachfolgenden Bearbeitung der Stirnseiten der einzelnen zylindrischen Werkstücke eben jene stirnseitigen Endbereiche vorn Härtungsprozess ausgenommen werden müssen. Zur Härtung des Werkstückes bedient man sich der an sich bekannten Induktionshärtung, mit der eine effektive Erhitzung nahezu des gesamten zylindrischen Werkstückes mit Ausnahme der stirnseitig gelegenen Werkstückendbereiche möglich ist. Die stirnseitig gelegenen Werkstückendbereiche, die vom Härtungsprozess bewusst ausgespart werden sollen weisen in Abhängigkeit der jeweiligen Werkstückgröße eine axiale Erstreckung bzw. Breite von wenigen Millimetern, vorzugsweise zwischen 1,5 mm und 2,5 mm auf.

Die in der vorstehenden Weise teilgehärteten, zylindrischen Werkstücke gilt es im weiteren an ihren Stirnseiten zumeist im Wege eines Materialabtragevorganges nachzubearbeiten. Es ist leicht einzusehen, dass sich im Falle eines vollständig durchgehärteten Werkstückes der Nachbearbeitungsschritt wesentlich schwieriger gestalten würde und auf das eingesetzte Abtragewerkzeug ungleich verschleißträchtiger auswirken würde. Aus diesem Grunde liegt ein besonderes Interesse darin, die als Halbfertig-Produkte vorliegenden teilgehärteten, zylinderförmigen Werkstücke unter den vorstehend beschriebenen Bedingungen teil zuhärten, um letztlich sicher zu stellen, dass die stirnseitigen Enden der teilgehärteten Werkstücke so genannte "Weichzonenbereiche" darstellen, also ungehärtet verbleiben.

Zur Qualitätsprüfung der teilgehärteten Halbfertig-Produkte bedient man sich bislang an sich bekannten Kontrollverfahren, wie beispielsweise der personellen Sichtprüfung der stirnseitigen Weichzonenbereiche. Hierbei bedarf es eines geschulten Blickes, um den gehärteten Werkstückbereich vom nicht gehärteten Bereich zu unterscheiden. Unter einem geeigneten Sichtwinkel und geeigneten Lichtverhältnissen wird Licht an der Weichzonenbereich-Oberfläche geringfügig anders reflektiert bzw. gestreut, als im Oberflächenbereich des gehärteten Werkstückes. Zweifelsohne ist diese Kontrolltechnik zeit- und kostenaufwendig. Überdies unterliegt das Kontrollpersonal einer unvermeidbar auftretenden Ermüdung, wodurch die Prüfsicherheit nicht mehr in gewünschter Weise gewährleistet werden kann.

Zur Vermeidung des personellen Einsatzes ist eine optische Kontrollmesstechnik bekannt, mit der es möglich ist, Farbunterschiede zu detektieren, durch die sich der Weichzonenbereich von der gehärteten Zone unterscheidet, siehe hierzu K. Pongsathaporn et a., "Case Depth Measurement of Induction Hardening Using Image Processing", Transaction of Materials and Heat Treatment Proceedings of the 14t h IFHTSE Congress, Vol. 25 No. 5 Oct. 2004, Seiten 564-566.

Neben optischen Verfahren sind auch elektromagnetische Verfahren, beispielsweise das Mehrfrequenzwirbelstromverfahren, bekannt, wie es beispielsweise aus der DE 36 20 491 C2 hervorgeht. Das Wirbelstromprinzip erkennt Oberflächenfehler sowie auch Gefügeunterschiede anhand von Unregelmäßigkeiten in induzierten Wirbelströmen. Tastsonden oder umfassende Sonden induzieren diese Wirbelströme und messen gleichzeitig die von den Wirbelströmen ausgehenden elektromagnetischen Felder. Die in der vorstehenden Druckschrift beschriebene Auswertung der im Wege der Mehrfrequenzwirbelstromtechnik gewonnenen Messsignale basiert auf der Ellipsenauswertung in der Impedanzebene unter Zugrundelegung mehrerer Messfrequenzen und erlaubt einen rein qualitativen Befund des zu untersuchenden Werkstückes. Aussagen hinsichtlich absoluter Größenangaben von vorhandenen Weichzonenbereichen sind mit den vorgeschlagenen Auswerteverfahren nicht möglich.

Auch sind so genannte magnetische Barkhausen-Rausch-Verfahren bekannt, mit denen in einem zu untersuchenden Werkstück im Wege dynamischer Ummagnetisierungsprozesse hochfrequente Barkhausen-Sprünge induziert werden, die mit einem magnetinduktiven Aufnehmer erfasst werden können. Siehe hierzu Altpeter, I. et al., "Quantitative hardening-depth measurements up to 4 mm by means of micromagnetic microstructure multiparameter analysis" Review of Progress in Quantitative Nondestructive Evaluation, 7B, (1988), Seiten-1471-1475. Im Bereich der Weichzone ist die Intensität des Barkhausen-Rauschens sehr viel größer als im Bereich der gehärteten Zone, so dass eine Unterscheidbarkeit und letztlich eine Messbarkeit beider Werkstückbereiche möglicht ist. Nachteilig ist jedoch die Notwendigkeit eines Anregungsjoches sowie die hohe Sensibilität auf äußere Störeinflüsse, wodurch ein industrieller Einsatz eines derartigen Verfahrens nur bedingt möglich ist.

Die DE 43 10 894 A1 beschreibt ein Verfahren sowie eine Prüfsonde zum zerstörungsfreien Untersuchen von Oberflächen elektrisch leitfähiger Werkstoffe, von dem die im weiteren beschriebene Erfindung als nächstkommenden Stand der Technik ausgeht. Mit der in der Druckschrift beschriebenen Prüfsonde soll es möglich sein Aussagen über Härte, Dicke und Gefügezustand der Oberfläche eines elektrisch leitfähigen Werkstoffes treffen zu können. Mit Hilfe eines Mehrfrequenzwirbelstromsensors können aufgrund der Wechselwirkung zwischen dem innerhalb des Werkstoffes wirkenden magnetischen Wechselfeldes und der in der Prüfspule des Mehrfrequenzwechselsensors induzierten messbaren Spannung Aussagen über wenigstens eine Materialeigenschaft der untersuchten Oberfläche im Bereich der Eindringtiefe des magnetischen Wechselfeldes angestellt werden. Insbesondere dient das bekannte Verfahren zur Bestimmung des Verlaufes eines Härteprofils längs eines zu untersuchenden elektrisch leitfähigen Werkstoffes zur Feststellung der Dicke jeweiliger Oberflächenschichten auf dem Werkstoff.

Vergleichbare Wirbelstromtechniken, die zur Bestimmung von Materialeigenschaften an metallischen Werkstücken eingesetzt werden können der DE 27 39 873 sowie der EP 0 833 150 A2 entnommen werden. Aus der ersteren, vorstehend genannten Druckschrift ist ein an Elektronikaufwand reduzierter Mehrfrequenzmessaufbau zu entnehmen, der sich zur Erzeugung der Prüffrequenzen der Multiplexmethode bedient. In der zweitgenannten Druckschrift ist ein Mehrfrequenzwirbelstromsensor beschrieben, mit dem u.a. die Härte des Materials eines Prüfkörpers gemessen werden kann.

### Darstellung der Erfindung

Der Erfindung liegt die Aufgabe zugrunde, ein Verfahren zur quantitativen Größenbestimmung eines Weichzonenbereiches eines teilgehärteten metallischen Werkstückes, das wenigstens einen gehärteten und einen ungehärteten Bereich aufweist, unter Verwendung wenigstens eines Mehrfrequenzwirbelstromsensors, derart anzugeben, dass mit möglichst einfachen und kostengünstigen Mitteln eine schnelle und genaue quantitative Bestimmung der Weichzonenbreite eines teilgehärteten Werkstückes, vorzugsweise eines als Halbfertig-Produkt vorliegenden Planetenradbolzens, möglicht wird. Das Verfahren soll im industriellen Maßstab einsetzbar sein und für den Inline-Betrieb, d.h. längs einer kontinuierlich oder takt weise arbeitenden Fertigungslinie einsetzbar sein.
Die quantitative Angabe, mit der der Weichzonenbereich gemessen werden soll, soll hinreichend genau, beispielsweise mit einer Genauigkeit von ±0,3 mm erfolgen.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der weiteren Beschreibung unter Bezugnahme auf das Ausführungsbeispiel zu entnehmen. Erfindungsgemäß ist ein Verfahren gemäß dem Oberbegriff des Anspruches 1 dadurch ausgebildet, dass relativ zu einem Mehrfrequenzwirbelstromsensor jeweils vereinzelt ein Werkstück derart bewegt bzw. zugeführt wird, dass ein durch den Mehrfrequenzwirbelstromsensor erzeugtes Wirbelstromfeld räumlich begrenzt mit dem Werkstück berührungslos in Wechselwirkung tritt, in diesem Wirbelströme hervorruft, die wiederum im Mehrfrequenzwirbelstromsensor ein Messsignal generieren, wobei das räumlich begrenzte Wirbelstromfeld eine längs zur Werkstückoberfläche orientierte größte Erstreckung aufweist, die größer ist als eine maximale Erstreckung des Weichzonenbereiches längs der Werkstückoberfläche.

Unter den vorstehend genannten Messvoraussetzungen gilt es in einem ersten Schrift Kalibrierdaten zu generieren, die anhand einer Anzahl von n Werkstücken, die vorzugsweise aus der Gruppe der zu vermessenden Werkstücke stammen, gewonnen werden. Hierbei werden die Messsignale der n Werkstücke unter Annahme eines vorgegebenen Normmaßes der Weichzonenbreite, d.h. das gewünschte Sollmaß einer längs zur Werkstückoberfläche orientierten Erstreckung des Weichzonenbereiches, zur Erstellung einer Kalibrierkurve, verwendet. Anhand der auf diese Weise erhaltenen Kalibrierkurve werden im Weiteren die in der Zuführung nachfolgenden Werkstücke in dergleichen Weise vermessen. Unter Zugrundelegung der Kalibrierkurve können nun die gewonnenen Messsignale jeweils absoluten Weichzonenbreiten zugeordnet werden.

Das erfindungsgemäße Verfahren zeichnet sich daher dadurch aus, dass unter kontinuierlicher getakteter Zuführung von Werkstücken zum Messsensor in einem ersten Schrift eine dynamische Kalibrierung, d.h. eine Erstellung einer Korrelation zwischen Messsignalen mit Sollgrößen, in Form von als absolute Werte vorliegenden Weichzonenbreiten, erfolgt. In einem zweiten Schritt schließt sich eine quantitative Bestimmung der Weichzonenbreite aller nachfolgenden, dem Mehrfrequenzmesssensor zugeführte Werkstücke, an, die mit hoher Genauigkeit durchgeführt wird. Das erfindungsgemäße Verfahren lässt sich demzufolge in einer industriellen Fertigungsstraße einsetzen, ohne dabei den Werkstückfluss längs einer Förderstraße zu beeinflussen, zumal die durchgeführte Qualitätskontrolle vollständig berührungslos erfolgt.

Das erfindungsgemäße Verfahren wird im weiteren unter Bezugnahme auf die Vermessung von Planetenradbolzen als Halbfertig-Produkte beschrieben, die wie vorstehend erwähnt, über eine zylinderförmige Form verfügen und zwei stirnseitig vorgesehene Weichzonenbereiche vorsehen, die durch einen in Axialrichtung größer dimensionierten gehärteten Mittenbereich voneinander getrennt sind.

Selbstverständlich lässt sich das erfindungsgemäße Verfahren auch auf alternative teilgehärtete Werkstücke anwenden, bei denen die Information über eine exakte räumliche Erstreckung von gehärteten oder nicht gehärteten Werkstückbereichen relevant ist.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Darstellung eines teilgehärteten Planetenradbolzens mit Mehrfrequenzwirbelstromsensor, sowie
- Fig. 2: qualitative diagrammartige Darstellung einer Amplitudenortskurve zur Bestimmung einer definierten Relativlage zwischen zu vermessendem Werkstück und Mehrfrequenzsensor.

### Wege zur Ausführung der Erfindung, gewerbliche Verwendbarkeit

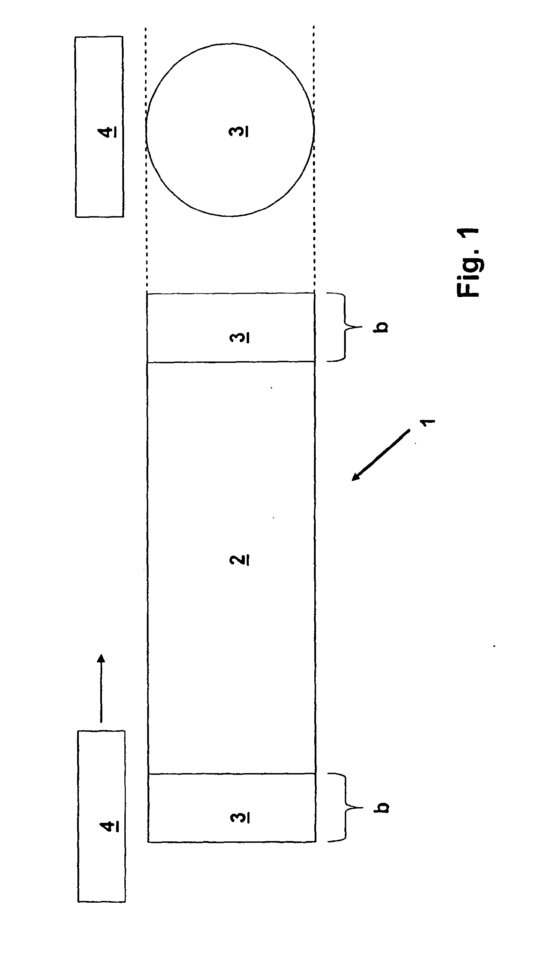

In Fig. 1 ist stark schematisiert ein Planetenradbolzen 1 dargestellt, der in aller Regel aus einem metallischen Vollmaterial besteht und im Wege einer Induktionshärtung im Mittenbereich des Bolzens 1 eine gehärtete Zone 2 aufweist. Die Figur 1 zeigt sowohl eine Seiten- als auch eine Vorderansicht auf die Messsituation. Beidseitig an der gehärteten Zone 2 angrenzend, schließen ungehärtete Bereiche, die so genannten Weichzonenbereiche 3 an, die mit den Stirnseiten des Planetenradbolzens 1 abschließen. Je nach Formgebung und Dimensionierung des Planetenradbolzens 1 weisen die Weichzonenbereiche 3 typischerweise eine axiale Längserstreckung, d.h. eine Weichzonenbreite b zwischen 1,5 mm und 2,5 mm auf.

Zur exakten Vermessung der Weichzonenbreite b, deren Kenntnis wichtig für nachfolgende Bearbeitungsprozesse ist, durch die der als Halbfertig-Produkt vorliegende Planetenradbolzen eine weiterführende äußere Form annimmt, die beispielsweise durch gezielten Materialabtrag innerhalb der Weichzonenbereiche 3 bestimmt wird, wird ein Mehrfrequenzwirbelstromsensor 4 in der in Fig. 1 angegebenen Richtung parallel zur Längserstreckung des Planetenradbolzens 1, beabstandet von dessen Oberfläche bewegt. In einer industriellen Anwendung ist es vorteilhaft, dass der Mehrfrequenzwirbelstromsensor 4 örtlich in Ruhe ist und die zu vermessenden Werkstücke vereinzelt, längs einer Förderstrecke dem Sensorbereich zugefördert werden.

Der Mehrfrequenzwirbelstromsensor 4 verfügt über eine in Bewegungsrichtung (siehe Pfeildarstellung) orientierte effektive Wirkbreite, die größer ist als die axiale Erstreckung der Weichzonenbreite 3, so dass gewährleistet ist, dass das vom Mehrfrequenzwirbelstromsensor 4 erzeugte Wirbelstromfeld bei geeigneter Positionierung relativ zum Planetenradbolzen 1 den Weichzonenbereich 3 vollständig überragt.

Zur exakten Erfassung der Weichzonenbreite b gilt es, eine Messkonstellation zu schaffen, in der der Mehrfrequenzwirbelstromsensor 4 die Weichzone 3 vollständig überragt, wobei das vom Mehrfrequenzwirbelstromsensor 4 erzeugte Wirbelstromfeld zugleich auch einen Teilbereich der an die Weichzone 3 angrenzende gehärtete Zone durchdringen soll. Eine derartige Messkonstellation ist in Fig. 1 dargestellt.

Da die Relativbewegung zwischen Mehrfrequenzwirbelstromsensor 4 und Planetenradbolzen 1 mit einer konstanten Geschwindigkeit erfolgt, gilt es eben jenen Zeitpunkt bzw. eben jene Messkonstellation, wie in Fig. 1 dargestellt, zu bestimmen, in der die Messung der gesuchten Weichzonenbreite b möglich ist.

Üblicherweise erfolgt die Messsignalaufnahme mittels des Mehrfrequenzwirbelstromsensors 4 in getakteter Weise, so dass, während der Wirbelstrommesssensor 4 über die gesamte Länge des Planetenradbolzens 1 bewegt wird, eine Vielzahl einzelner Messsignale aufgenommen wird. Der Mehrfrequenzwirbelstromsensor 4 wird in vorteilhafter Weise mit vier unterschiedlichen Prüffrequenzen betrieben, so dass letztlich pro Messpunkt vier Messsignale erhalten werden, die jeweils gemäß Phase und Amplitude zur weiteren Auswertung in der komplexen Impedanzebene in Real- und Imaginärteil auf gespalten werden. Somit stehen zur Signalauswertung pro Messpunkt acht unterschiedliche Messsignalkomponenten zur Verfügung.

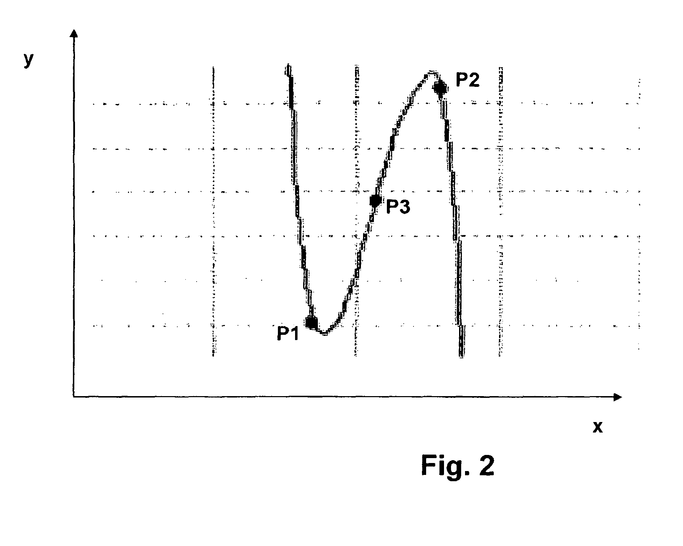

Aus den gewonnenen Messsignalen während der Relativbewegung des Mehrfrequenzwirbelstromsensors 4 längs der Oberfläche axialwärts zum Planetenradbolzen 1 können für jede Messfrequenz die gewonnenen Messsignale in Form einer Amplitudenortskurve dargestellt werden. Anhand der in Figur 2 dargestellten Amplitudenortskurve (x-Achse entspricht der Ortskoordinate, längs der y-Achse sind die Amplitudenpegel des Messsignals aufgetragen) lässt sich exakt jenes Messsignal extrahieren, das in der vorstehend beschriebenen, für die Messung der Weichzonenbreite b erforderlichen Messkonstellation, gewonnen worden ist. Die Festlegung bzw. Auswahl des für die Messauswertung relevanten Messsignals aus der Amplitudenortskurve erfolgt unter Zugrundelegung empirisch gewonnener Informationen, sofern die Relativgeschwindigkeit zwischen Sensor und Werkstück hinreichend konstant ist.

In gleicher Weise, mit der die Messsignalextraktion zur Weichzonenbreitenbestimmung der in Fig. 1 dargestellten linken Weichzone 3 durchgeführt wird, lässt sich ebenso ein bestimmtes Messsignal zur Weichzonenbreitenbestimmung der in Fig. 1 rechten dargestellten Weichzone 3 ableiten.

Wie die vorstehenden Ausführungen zeigen, ist es möglich, die räumliche Relativlage zwischen Mehrfrequenzwirbelstromsensor 4 und dem zu vermessenden Planetenradbolzen 1 berührungsfrei und letztlich ausschließlich unter Verwendung der mit dem Mehrfrequenzwirbelstromsensor 4 gewonnenen Messsignale zu ermitteln.

Bevor die gewonnenen Messsignale, die als Amplituden- und Phaseninformationen vorliegen, exakten Breitenwerten b, beispielsweise unter Angabe absoluter mm-Werte, zugeordnet werden können, bedarf es einer Messsignalkalibrierung die erfindungsgemäß dynamisch durchgeführt wird, d.h. während der normalen fertigungstechnischen Zuführung von zu vermessenden Planetenradbolzen zum Mehrfrequenzwirbelstromsensor 4. Unter Voraussetzung, dass die als Halbfertigprodukte vorliegenden, teilgehärteten Planetenradbolzen so genannte i.O.-Teile sind, d.h. Planetenradbolzen mit korrekt dimensionierten Weichzonenbreiten b, die bekannt sind, werden die ersten n in der Werkstückzuführung zum Mehrfrequenzwirbelstromsensor 4 zu Kalibrierzwecken ausgewählt. In geeigneter Weise werden einzelne Planetenradbolzen zu Kalibrierzwecken vermessen, wobei die in vorstehend beschriebener Weise vermessenen Planetenradbolzen jeweils Messsignale liefern, die mit den absoluten Weichzonenbreiten b in Korrelation gebracht werden. Um bspw. das Messsignal, das die Weichzonenbreite b angrenzend an der linken Stirnseite des Planetenradbolzens 1 repräsentiert, aus der Amplitudenortskurve zu extrahieren, wird, beruhend auf empirischen Kenntnissen, der Punkt P1 gewählt. Die Anzahl der zwischen dem Punkt P1 und dem Minimum liegenden Messsignale bestimmt sich empirisch. In gleicher Weise verhält es sich mit der Auswahl des Punktes P2, der die Breite der rechten Weichzone repräsentiert.

Für die Ermittlung einer Kalibrierkurve ist jedoch wenigstens ein weiterer Messpunkt notwendig, der sich durch Erfassen eines Messsignals inmitten des Planetenradbolzens, also inmitten der gehärteten Zone 2, ergibt. Dieses Messsignal P3 befindet sich zwischen dem Minimum und Maximum der Amplitudenortskurve. Da in diesem Bereich mit Sicherheit angenommen werden kann, dass keine Weichbereiche enthalten sind, ist hier die Weichzonenbreite b gleich Null. Auf der Grundlage dieser beiden Messwerte wird eine Kalibrierkurve erstellt, die den weiteren Messungen an den nachfolgenden Planetenradbolzen zugrunde gelegt wird.

Alle in Förderrichtung, den zu Kalibrierzwecken vermessenen Planetenradbolzen nachfolgenden Planetenradbolzen werden mit der identischen Messweise, jedoch unter Zugrundelegung der gewonnenen Kalibrierkurve, bezüglich ihrer Weichzonenbreiten b, vermessen. Dies erfolgt durch Zuordnung der an den definierten Messkonstellationen erhaltenen Messsignale mit den aus der Kalibrierkurve entnehmbaren Breitenwerten bezüglich der Weichzone 3.

Um die Messgenauigkeit weiter zu steigern, können die zu Kalibrierzwecken eingesetzten Planetenradbolzen nachträglich mittels konventioneller Messtechnik hinsichtlich ihrer jeweiligen Weichzonenbreiten b vermessen werden. Bei auftretenden Abweichungen zwischen den konventionellen Messtechniken, beispielsweise unter Verwendung optischer Vermessung der Weichzonenbreite geätzter Bolzen, wobei sich die Weichzone farblich deutlich von der gehärteten Zone unterscheidet, und dem gewonnenen Messsignal im Wege der dynamischen Kalibrierung, kann die Kalibrierkurve entsprechend korrigiert werden.

Mit Hilfe des erfindungsgemäßen Verfahrens ist es möglich, Planetenradbolzen längs einer Förderstrecke einem Mehrfrequenzwirbelstromsensor derart zuzuführen, dass bis zu 60 Planetenradbolzen pro Minute exakt vermessen werden können. Die Messungen können mit einer quantitativen Genauigkeit hinsichtlich des Breitenwertes der Weichzone von ± 0,3 mm durchgeführt werden. Diese überaus hohe Genauigkeit und Zuverlässigkeit des Prüfverfahrens führt letztlich zu einer sehr geringen Pseudo-Ausschussquote, die jenen Anteil an vermessenen Planetenradbolzen angibt, die fälschlicherweise als außerhalb eines frei wählbaren Toleranzbereiches liegend bewertet werden.

### Bezugszeichenliste

- 1: Planetenradbolzen
- 2: Gehärtete Zone
- 3: Weichzone
- 4: Mehrfrequenzwirbelstromsensor

## Patentansprüche

1. Verfahren zur quantitativen Größenbestimmung eines Weichzonenbereiches eines teilgehärteten metallischen Werkstückes, das wenigstens einen gehärteten und einen ungehärteten Bereich aufweist mittels wenigstens einem Mehrfrequenzwirbelstromsensor,
**dadurch gekennzeichnet, dass** relativ zum Mehrfrequenzwirbelstromsensor jeweils vereinzelt ein Werkstück derart bewegt wird, dass ein durch den Mehrfrequenzwirbelstromsensor erzeugtes Wirbelstromfeld räumlich begrenzt mit dem Werkstück berührungslos in Wechselwirkung tritt, in diesem Wirbelströme hervorruft, die wiederum im Mehrfrequenzwirbelstromsensor ein Messsignal generieren, wobei das räumlich begrenzte Wirbelstromfeld eine längs zur Werkstückoberfläche orientierte größte Erstreckung aufweist, die größer ist als eine maximale Erstreckung des Weichzonenbereiches längs der Werkstückoberfläche,
dass zu Kalibrierzwecken eine Anzahl n Werkstücke vermessen wird, wobei die Messsignale der n Werkstücke unter Annahme eines vorgegeben Normmaßes der Weichzonenbreite, d.h. Sollmaß einer längs zur Werkstückoberfläche orientierten Erstreckung des Weichzonenbereiches, zur Erstellung einer Kalibrierkurve verwendet werden, und
dass unter Zugrundelegung der Kalibrierung den von jedem einzelnen Werkstück gewonnenen Messsignalen jeweils eine absolute Weichzonenbreite zugeordnet wird.

2. Verfahren nach Anspruch 1,
**dadurch gekennzeichnet, dass** die Werkstücke zylindrisch ausgebildet sind und relativ zum Wirbelstromsensor längs ihrer Zylinderachse bewegt werden.

3. Verfahren nach Anspruch 1 oder 2,
**dadurch gekennzeichnet, dass** die Werkstücke Planetenradbolzen sind, die über eine Zylindergeometrie verfügen und jeweils zwei stirnseitig gelegene Weichzonenbereiche aufweisen, die von einem gehärteten Mittenbereich voneinander getrennt sind, wobei der Mittenbereich eine größere axiale Erstreckung aufweist als die Weichzonenbereiche, die typischerweise jeweils eine axiale Erstreckung, d.h. eine Weichzonenbreite von 1,5 mm bis 2,5 mm aufweisen.

4. Verfahren nach einem der Ansprüche 1 bis 3,
**dadurch gekennzeichnet, dass** der Mehrfrequenzwirbelstromsensor derart betrieben wird, dass während der Vermessung eines Werkstückes, das sich relativ zum Mehrfrequenzwirbelstromsensor mit konstanter Geschwindigkeit bewegt, eine Vielzahl von Messsignalen erzeugt und als Amplitudenortskurve aufgezeichnet wird, und
dass aus wenigstens einem Teilbereich der Amplitudenortskurve eine Messkonstellation, in der das Werkstück eine definierte Lage zum Mehrfrequenzwirbelstromsensor aufweist, ausgewählt wird, in der ein Messsignal aufgenommen wird, das zur Größenbestimmung der Weichzonenbreite herangezogen wird.

5. Verfahren nach Anspruch 4.
**dadurch gekennzeichnet, dass** die definierte Lage derart gewählt wird, dass das Wirbelstromfeld des Mehrfrequenzwirbelstromsensors den Weichzonenbereich zumindest in Erstreckung längs zur Bewegungsrichtung vollständig erfasst.

6. Verfahren nach Anspruch 4 oder 5, **dadurch gekennzeichnet, dass** die definierte Lage ausschließlich durch Auswertung der Amplitudenortskurve ermittelt wird.

7. Verfahren nach einem der Ansprüche 1 bis 6,
**dadurch gekennzeichnet, dass** als Mehrfrequenzwirbelstromsensor ein mit vier unterschiedlichen Prüffrequenzen betreibbarer Mehrfrequenzwirbelstromsensor verwendet wird.

## Claims

1. A method for quantitatively determining the size of a soft zone area of a partially hardened metal workpiece, which has at least one hardened and one unhardened area by using at least one multifrequency eddy current sensor,
**characterized in that** one workpiece at a time is displaced relative to the multifrequency eddy current sensor in such manner that an eddy current field generated by the multifrequency eddy current sensor interacts contactlessly with the workpiece in spatially delimited manner, giving rise to eddy currents therein, which in turn generate a measurement signal in the multifrequency eddy current sensor, wherein the spatially delimited eddy current field has a largest extension aligned longitudinally with respect to the workpiece surface that is greater than a maximum extension of the soft zone area along the workpiece surface,
that a number n of workpieces is measured for calibration purposes, wherein the measurement signals of the n workpieces are used with the assumption of a predetermined standard size of the soft zone width, that is to say the specified dimension of an extension of the soft zone area aligned longitudinally with respect to the workpiece surface, to produce a calibration curve, and
that one absolute soft zone width is assigned to the measurement signals obtained from each workpiece on the basis of the calibration.

2. The method according to claim 1,
**characterized in that** the workpieces are constructed cylindrically and are moved along their cylinder axis relative to the eddy current sensor.

3. The method according to claim 1 or 2,
**characterized in that** the workpieces are planetary gear pins, or have a cylindrical geometry and have soft zone areas on each frontal face thereof that are separated from each other by a hardened centre area, wherein the centre area has a greater axial extension than the soft zone areas, each of which typically has an axial extension, that is to say a soft zone width, from 1.5 mm to 2.5 mm.

4. The method according to any of claims 1 to 3,
**characterized in that** the multifrequency eddy current sensor is operated in such manner that a plurality of measurement signals are generated and recorded as an amplitude locus during measurement of a workpiece, which moves at constant speed relative to the multifrequency eddy current sensor, and
that a measurement constellation in which the workpiece has a defined position relative to the multifrequency eddy current sensor is selected from at least one section of the amplitude locus, and in which a measurement signal to be used for determining the size of the soft zone width is recorded.

5. The method according to claim 4,
**characterized in that** the defined position is selected in such manner that the eddy current field of the multifrequency eddy current field sensor captures the soft zone area at least in extension longitudinally to the direction of movement.

6. The method according to either of claims 4 or 5,
**characterized in that** the defined position is determined exclusively by evaluating the amplitude locus.

7. The method according to any of claims 1 to 6,
**characterized in that** a multifrequency eddy current sensor that is operable with four different test frequencies is used as the multifrequency eddy current sensor.

## Revendications

1. Procédé pour déterminer l'ordre de grandeur quantitatif d'un secteur de zones tendres d'une pièce à usiner métallique partiellement trempée, comportant au moins un secteur trempé et un secteur non trempé, au moyen d'au moins un capteur multifréquences de courants de Foucault,
**caractérisé en ce que** par rapport au capteur multifréquences de courants de Foucault, de façon chaque fois individuelle, une pièce à usiner est déplacée de sorte qu'un champ de courants de Foucault créé par le capteur multifréquences de courants de Foucault entre en interaction sans contact, de façon limitée dans l'espace avec la pièce à usiner, provoque dans cette dernière des courants de Foucault, qui à leur tour génèrent un signal de mesure, le champ de courants de Foucault limité dans l'espace présentant une extension la plus grande orientée le long de la surface de la pièce à usiner qui est supérieure à une extension maximale du secteur de zones tendres le long de la surface de la pièce à usiner,
**en ce qu'**à des fins de calibrage, un nombre n de pièces à usiner est mesuré, les signaux de mesure des n pièces à usiner étant utilisés sous hypothèse d'une dimension standardisée pour la largeur des zones tendres, c'est-à-dire d'une dimension de consigne pour une extension du secteur des zones tendres orientée le long de la surface de la pièce à usiner, pour l'établissement d'une courbe de calibrage et
**en ce que** sur la base du calibrage des signaux de mesure récupérés par chaque pièce à usiner individuelle, une largeur absolue de zone tendre est à chaque fois affectée.

2. Procédé selon la revendication 1,
**caractérisé en ce que** les pièces à usiner sont conçues sous forme cylindrique et sont déplacées par rapport au capteur de courants de Foucault le long de leur axe cylindrique.

3. Procédé selon la revendication 1 ou 2,
**caractérisé en ce que** les pièces à usiner sont des boulons de pignons satellites, qui disposent d'une géométrie cylindrique et présentent chacun deux secteurs de zones tendres situés côté frontal, qui sont séparés l'un de l'autre par un secteur central trempé, le secteur central présentant une extension axiale supérieure à celle des secteurs de zones tendres, qui présentent typiquement une extension axiale chacun, c'est-à-dire une largeur de zones tendres de 1,5 mm à 2,5 mm.

4. Procédé selon l'une quelconque des revendications 1 à 3,
**caractérisé en ce que** le capteur multifréquences de courants de Foucault est exploité de sorte à ce que pendant la mesure d'une pièce à usiner qui se déplace à vitesse constante par rapport au capteur multifréquences de courants de Foucault, une pluralité de signaux de mesure est créée et enregistrée en tant que lieu de réponse en amplitude, et
**en ce qu'**à partir d'au moins un secteur partiel du lieu de réponse en amplitude, une constellation de mesure, dans laquelle la pièce à usiner présente une position définie par rapport au capteur multifréquences de courants de Foucault est choisie, dans laquelle est relevé un signal de mesure qui est impliqué pour la détermination de l'ordre de grandeur de la largeur de la zone tendre.

5. Procédé selon la revendication 4,
**caractérisé en ce que** la position définie est choisie de sorte que le champ de courants de Foucault du capteur multifréquences de courants de Foucault englobe totalement le secteur de zones tendres, au moins en extension le long de la direction de déplacement.

6. Procédé selon la revendication 4 ou 5,
**caractérisé en ce que** la position définie est déterminée exclusivement par évaluation du lieu de réponse en amplitude.

7. Procédé selon l'une quelconque des revendications 1 à 6,
**caractérisé en ce qu'**en tant que capteur multifréquences de courants de Foucault, il est utilisé un capteur multifréquences de courants de Foucault exploitable avec quatre différentes fréquences d'essai.
